# EUROPEAN PATENT APPLICATION

(11) **EP 2 913 866 A1**
(43) Date of publication of application: **02.09.2015**
(21) Application number: 15156742.7
(22) Date of filing: 26.02.2015
(51) Int. Cl.: H01M 2/16, H01M 10/0525, H01M 10/0587, H01M 10/04

(54) **Secondary battery with a plurality of electrode assemblies**

(30) Priority: 26.02.2014 KR 20140022436
(71) Applicant: Samsung SDI Co., Ltd., Yongin-si, Gyeonggi-do (KR)
(72) Inventor: Kim, Hong-Jeong, Gyeonggi-do (KR); Lee, Jong-Ki, Gyeonggi-do (KR); Joo, Kyu-Nam, Gyeonggi-do (KR); Lim Kyun, Gyeonggi-do (KR)
(74) Representative: Mounteney, Simon James

(57) **Abstract**

A secondary battery includes a first electrode assembly, a second electrode assembly and a case. The first electrode assembly includes a first positive electrode plate, a first negative electrode plate, and a separator interposed between the first positive electrode plate and the first negative electrode plate. The second electrode assembly includes a second positive electrode plate, a second negative electrode plate, and a separator interposed between the second positive electrode plate and the second negative electrode plate, and has low capacity and high maximum discharge rate, as compared with the first electrode assembly. The case accommodates the first and second electrode assembly therein. In the secondary battery, the second separator has a porosity greater than that of the first separator. Accordingly, it is possible to improve the lifespan of the secondary battery and to implement high maximum discharge rate and high capacity.

## Description

### BACKGROUND

### 1. Field

The present invention relates to a secondary battery.

### 2. Description of the Related Art

Since secondary batteries can be reversibly charged/discharged many times, such batteries are reusable. Thus, these batteries can be used efficiently. The shapes of the secondary batteries can be freely selected with regard to the external electronic devices in which the secondary batteries are employed. Since secondary batteries can effectively accumulate energy as compared with their volume and mass, they are frequently used as maximum discharge rate sources of portable electronic devices.

With the development of portable communication devices, the demands placed upon secondary batteries employed in these communication devices has increased. Accordingly, studies have been conducted to improve characteristics such as reliability and the lifespan of secondary batteries.

### SUMMARY

The invention sets out to provide a secondary battery having improved lifespan, high maximum discharge rate and high capacity relative to the prior art.

According to an aspect of the present invention, there is provided a secondary battery, including: a first electrode assembly configured to include a first positive electrode plate, a first negative electrode plate, and a separator interposed between the first positive electrode plate and the first negative electrode plate; a second electrode assembly configured to include a second positive electrode plate, a second negative electrode plate, and a separator interposed between the second positive electrode plate and the second negative electrode plate, the second electrode assembly having low capacity and high maximum discharge rate, as compared with the first electrode assembly; and a case configured to accommodate the first and second electrode assembly therein, wherein the second separator has a porosity greater than that of the first separator.

The porosity of the second separator may be 40% or more.

The first separator may have a multi-layered structure.

The first separator may have a two-layer structure of polyethylene (PE)/polypropylene (PP).

The first separator may have a three-layer structure of PP/PE/PP or PE/PP/PE.

The first separator may include a coating layer positioned on at least one surface thereof.

The coating layer may include heat-resistance ceramic.

The coating layer may include polymer resin.

The tensile strength of the first separator in its length direction may be 1500kgf/cm² or more.

The tensile strength of the first separator in its width direction may be 1000kgf/cm² or more.

The perforation strength of the first separator may be 550f or more.

The contraction ratio of the first separator may be 5% or less when the first separator is exposed at 120°C for one hour.

The second separator may include polyurethane (PO) or non-woven.

The second separator may be more highly porous than the first separator.

The second separator may have a ventilation rate where air of 100ml passes through the second separator is 300 second or less.

The first and second electrode assemblies may be connected in parallel to each other.

The first and second electrode assemblies may be separately wound to be accommodated in the case.

At least some of the above and other features of the invention are set out in the claims.

Other features and advantages of the present invention will become more fully apparent from the following detailed description, taken in conjunction with the accompanying drawings.

Terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

According to the present invention, it is possible to provide a secondary battery in which the porosity of the second separator is greater than that of the first separator, thereby satisfying high-capacity and high-maximum discharge rate characteristics.

### BRIEF DESCRIPTION OF THE DRAWINGS

Example embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey the scope of the invention to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a secondary battery according to an embodiment of the present invention.
FIG. 2 is an exploded perspective view of the secondary battery shown in FIG. 2.
FIG. 3 is an exploded perspective view of a first electrode assembly shown in FIG. 1.
FIG. 4 is a sectional view of the first electrode assembly shown in FIG. 3.
FIGS. 5 to 7 are sectional views showing modifications of a first separator shown in FIG. 4.
FIG. 8 is an exploded perspective view of the second electrode assembly of the secondary battery shown in FIG. 2.
FIG. 9 is a sectional view of the second electrode assembly shown in FIG. 8.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

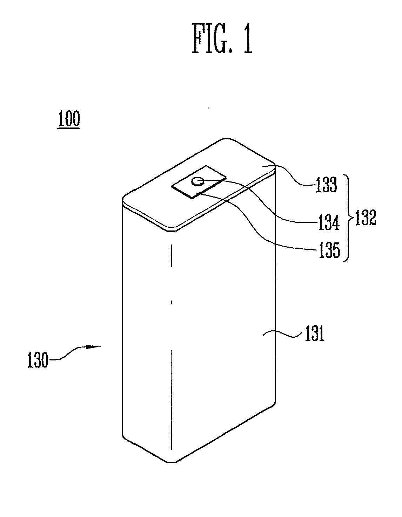

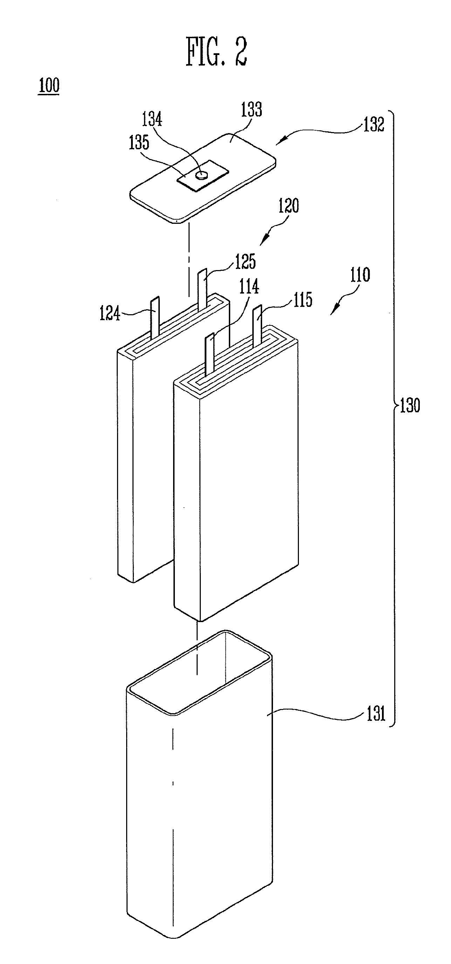

FIG. 1 is a perspective view of a secondary battery 100 according to an embodiment of the present invention. FIG. 2 is an exploded perspective view of the secondary battery 100 shown in FIG. 1.

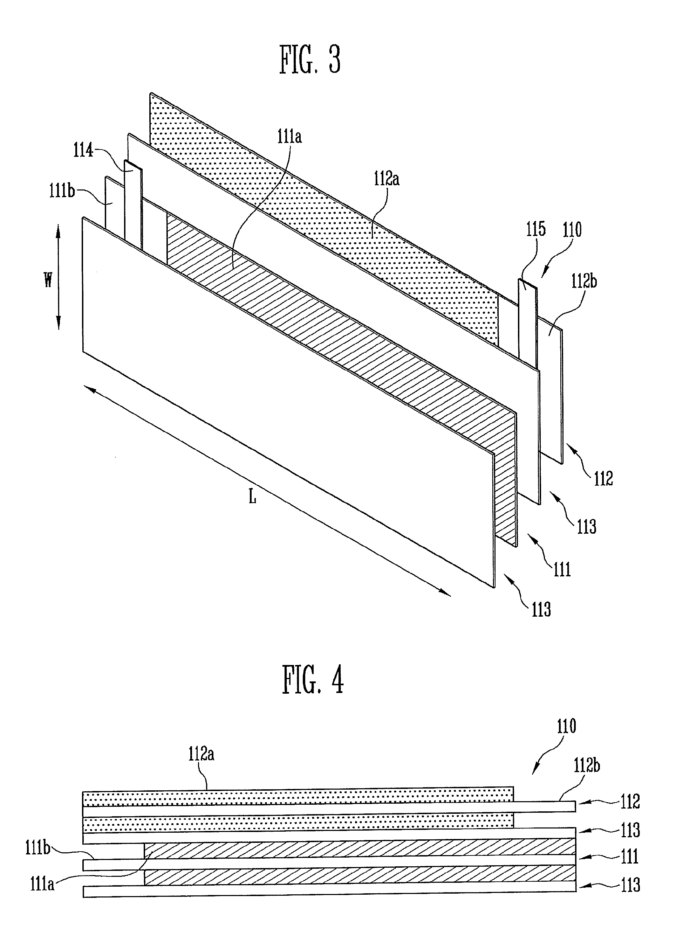

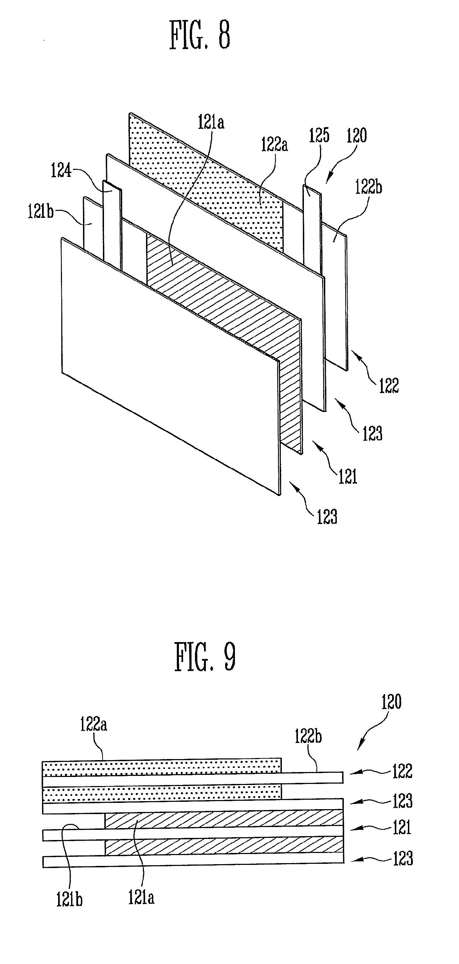

As shown in FIGS. 1 and 2, the secondary battery 100 according to this embodiment includes a first electrode assembly 110, a second electrode assembly 120 and a case 130. The second electrode assembly 120 may have low capacity and high maximum discharge rate, as compared with the first electrode assembly 110, and a second separator 123 (see FIG. 8) of the second electrode assembly 120 may have a porosity greater than that of a first separator 113 (see FIG. 3) of the first electrode assembly 110.

Generally, when a secondary battery is used as a maximum discharge rate source of an electronic device such as a smart phone, the state of current required in the secondary battery is changed depending on characteristics and use patterns of the electronic device, but the expectation for the lifespan and use time of the secondary battery is always high. The electronic device has different maximum discharge rate and use capacities, which are respectively required at its operating and waiting times. In case of an ordinary secondary battery, the secondary battery has only any one characteristic of high capacity and excellent maximum discharge rate.

The use environment of the electronic device may generally include a base load that is a state in which the electronic device consumes low current, and a peak load that is a state in which the electronic device suddenly consumes high current. For example, the peak load is a state in which a high maximum discharge rate is required for a short period of time. In an actual product, a peak load occurring when a transmission call is made using a GSM cellular phone is typical (very short high-maximum discharge rate pulse at the level of millisecond). An AP burst phenomenon (middle-maximum discharge rate pulse at the level of sub-second), arising when maximum discharge rate instantaneously increases when a game or the like is driven in a notebook computer, tablet PC or the like is another example of a peak load.

When a secondary battery having high capacity is used as a maximum discharge rate source of an electronic device having such a large change in load, it is difficult to flexibly deal with a change from the base load to the peak load. As such a problem repeatedly occurs, the degradation of the secondary battery is accelerated, and therefore, the lifespan and use time of the secondary battery may be reduced. Since a secondary battery having excellent maximum discharge rate characteristics ordinarily has a relatively low capacity, the use time of an electronic device is shortened when the secondary battery is employed as a maximum discharge rate source of the electronic device.

In order to solve such a problem, in the present invention, the first electrode assembly 110 is implemented with high capacity, as compared with the second electrode assembly 120, and the second electrode assembly 120 is implemented with high maximum discharge rate, as compared with the first electrode assembly 110. Particularly, the second separator 123 of the second electrode assembly 120 has a porosity greater than that of the first separator 113 of the first electrode assembly 110, so that it is possible to easily implement the high-capacity and high-maximum discharge rate secondary battery 100. In this case, when the first electrode assembly 110 is implemented with high capacity and the second electrode assembly 120 is implemented with high maximum discharge rate in the present invention, it is possible to flexibly deal with an electronic device having a large change in load, using the second electrode assembly 120, and it is possible to increase use time, using the first electrode assembly 110. For example, the second electrode assembly 120 can quickly generate high current, in a state in which the electronic device is in a peak load, and thus the secondary battery is not damaged, thereby improving the lifespan of the secondary battery.

The case 130 is a member which accommodates the first and second electrode assemblies therein.

Here, the case 130 includes a main body 131 of which one surface is opened to admit the first electrode assembly 110, the second electrode assembly 120 and an electrolyte, and a cap assembly 132 configured to seal the main body 131. The cap assembly 132 includes a cap plate 133 formed in a shape corresponding to the opened surface of the main body 131, a negative electrode pin 134 provided in the cap plate 133, and a gasket 135 configured to insulate between the negative electrode pin 134 and the cap plate 133. A first positive electrode tab 114 of the first electrode assembly 110 and a second positive electrode tab 124 of the second electrode assembly 120 are electrically connected to the cap plate 133 or the main body 131, and a first negative electrode tab 115 of the first electrode assembly 110 and a second negative electrode tab 125 of the second electrode assembly 120 are electrically connected to the negative electrode pin 134, to supply maximum discharge rate to an outside. Meanwhile, although it has been described in this embodiment that the secondary battery 100 is a square-type secondary battery, the present invention is not limited thereto. That is, the secondary battery may be a pouch-type or cylinder-type secondary battery, for example.

The first and second electrode assemblies 110 and 120 accommodated in the case 130 are separately wound to be formed in different jelly-roll shapes from each other, but share the electrolyte with each other. Because two electrode assemblies are accommodated in the one case 130 and share the same electrolyte, it is possible to decrease the size of the secondary battery and to omit a separate voltage control element, etc, although such a configuration is not essential. In the first and second electrode assemblies 110 and 120, the first and second positive electrode tabs 114 and 124 may be connected in parallel to each other, and the first and second negative electrode tabs 115 and 125 may be connected in parallel to each other. However, the present invention is not limited thereto, and the first and second electrode assemblies 110 and 120 may be wound together.

FIG. 3 is an exploded perspective view of the first electrode assembly 110 shown in FIG. 2. FIG. 4 is a sectional view of the first electrode assembly 110 shown in FIG. 3. The first electrode assembly 110 of the secondary battery 100 according to this embodiment will be described with reference to FIGS. 3 and 4.

As shown in FIGS. 3 and 4, the first electrode assembly 110 according to this embodiment includes a first positive electrode plate 111, a first negative electrode plate 112 and a first separator 113 interposed between the first positive electrode plate 111 and the first negative electrode plate 112.

Here, the first positive electrode plate 111 includes a first positive electrode active material coating portion 111a where a first positive electrode active material is coated on a first positive electrode base material, and a first positive electrode non-coating portion 111b where the first positive electrode active material is not coated, so that the first positive electrode base material is exposed. The first positive electrode base material is a material having high conductivity, and is not particularly limited as long as it causes no chemical change. For example, the first positive electrode base material may include aluminum, nickel, titanium, sintered carbon, etc. The first positive electrode active material may include a lithium compound that is a layered compound including lithium. The first positive electrode active material may further include a conductive agent for improving conductivity, and a binder for improving the bonding force between the lithium compound and the first positive electrode base material. The first positive electrode active material may be formed by mixing the lithium compound, the conductive agent and the binder with a solvent to prepare the mixture in the form of slurry and then coating the first positive electrode active material in the form of slurry on the first positive electrode base material. For example, the solvent may include N-methyl-2-pyrrolidone (NMP), and the lithium compound may include LiCoOx, LiMnOx, LiNiOx (here, x is a natural number), etc. The conductive agent may include carbon black or acetyl black, and the binder may include polyvinylidene fluoride. However, the present invention is not limited thereto.

The first negative electrode plate 112 includes a first negative electrode active material coating portion 112a where a first negative electrode active material is coated on a first negative electrode base material, and a first negative electrode non-coating portion 112b where the first negative electrode active material is not coated, so that the first negative electrode base material is exposed. The first negative electrode base material is a conductive metal plate, and may include, for example, copper, stainless steel, aluminum, nickel, etc. The first negative electrode active material may include a carbon compound. The first negative electrode active material may further include a binder for improving the bonding force between the carbon compound and the first negative electrode base material, and the like. The first negative active material may be formed by mixing the carbon compound, the binder and the like with a solvent to prepare the mixture in the form of slurry and then coating the first negative electrode active material in the form of slurry on the first negative electrode base material. For example, the solvent may include water, the carbon compound may include graphite, and the binder may include styrene-butadiene rubber, etc. However, the present invention is not limited thereto.

The first separator 113 is used to prevent the first positive electrode plate 111 and the first negative electrode plate 112 from being directly contacted with each other, and may be made of a porous insulator so that ions or the electrolyte can move between the first positive electrode plate 111 and the first negative electrode plate 112. The separator 113, for example, may include two sheets of separators to be interposed between the first positive and negative electrode plates 111 and 112 of the first electrode assembly 110, which are wound. However, the present invention is not limited thereto. For example, the first electrode assembly 110 may be formed by stacking the first positive electrode plate 111, the first negative electrode plate 112 and the first separator 113.

The electrolyte enables ions such as lithium ions to move between the first positive electrode plate 111 and the first negative electrode plate 112, and may further include a lithium salt or additive that acts as a supply source of lithium ions in the secondary battery. Here, the electrolyte may be a non-aqueous organic solvent, and the non-aqueous organic solvent acts as a medium through which ions participating in the electrochemical reaction of the battery can move. The non-aqueous organic solvent may include one or more selected from a carbonate-based, ester-based, ether-based, ketone-based, alcohol-based and aprotic solvents, but the present invention is not limited thereto. In this case, the carbonate-based solvent may include, for example, a chain carbonate compound such as dimethyl carbonate (DMC), diethyl carbonate (DEC), dipropyl carbonate (DPC), methylpropyl carbonate (MPC), ethylpropyl carbonate (EPC), methylethyl carbonate (MEC) or ethylmethyl carbonate (EMC), an annular carbonate compound such as ethylene carbonate (EC), propylene carbonate (PC) or butylene carbonate (BC), and the like, but the present invention is not limited thereto. The ester-based solvent may include, for example, methylacetate, ethylacetate, n-propylacetate, dimethylacetate, methylpropionate, ethylpropionate, decanolide, valerolactone, mevalonolactone, caprolactone, and the like, but the present invention is not limited thereto. The ether-based solvent may include, for example, dibutyl ether, tetraglyme, diglyme, dimethoxyethane, 2-methyltetrahydrofuran, tetrahydrofuran, and the like, but the present invention is not limited thereto. The ketone-based solvent may include, for example, cyclohexanone and the like, but the present invention is not limited thereto. The alcohol-based solvent may include, for example, ethyl alcohol, isopropyl alcohol, and the like, but the present invention is not limited thereto. In this case, the non-aqueous organic solvent may be used singularly or in a mixture. When the organic solvent is used in a mixture, the mixture ratio may be appropriately controlled according to a desirable battery performance. Meanwhile, the lithium salt is dissolved in the organic solvent, to enable to make the basic operation of a lithium secondary battery possible and to promote the movement of lithium ions between positive and negative electrodes. Specifically, the lithium salt may include, for example, LiPF₆, LiBF₄, LiSbF₆, LiAsF₆, LiN(SO₃C2F₅)₂, LiC₄F₉SO₃, LiClO₄, LiAlO₂, LiAlCl₄, LiN(CₓF₂ₓ+1SO₂)(C_{y}F_{2y}+1SO₂) (here, x and y are natural numbers), LiCl, LiI, LiB(C₂O₄)₂ (lithium bis(oxalato) borate; LiBOB) and combinations thereof. The concentration of the lithium salt may range from about 0.1 to 2.0 M. The concentration of the lithium salt may be variously applied according to design specifications of secondary batteries.

The substantial supply source of lithium ions in the first positive electrode plate 111 is the first positive electrode active material coating portion 111a, and the first positive electrode active material coating portion 111a may exchange ions with the first negative electrode active material coating portion 112a opposite thereto. The first positive electrode tab 114 is electrically connected to the first positive electrode non-coating portion 111b, and the first negative electrode tab 115 is electrically connected to the first negative electrode non-coating portion 112b, so that maximum discharge rate generated through the interaction between the first electrode assembly 110 and the electrolyte can be transferred to an outside of the secondary battery.

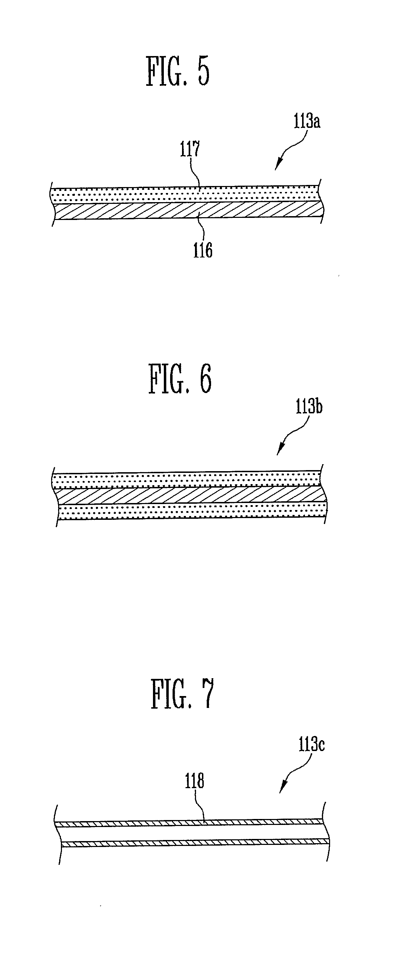

FIGS. 5 to 7 are sectional views showing modifications of the first separator 113 shown in FIG. 4. Hereinafter, the first separator 113 according to this embodiment will be described in detail with reference to FIGS. 5 to 7.

Since the first electrode assembly 110 is implemented with high capacity as described above, the amount of the active material is large. Therefore, the first electrode assembly 110 may be relatively unstable, and a large amount of heat may be generated from the first electrode assembly 110. Accordingly, the first separator 113 of the first electrode assembly 110 includes a material or structure having relatively high stability. The first separator 113 of the first electrode assembly 110 according to this embodiment may have a multi-layered structure or coating layer or use a material having high solidity and low contraction ratio in order to improve the stability thereof.

Specifically, as shown in FIG. 5, for example, the first separator 113a may be formed into a two-layer structure of polyethylene (PE)/polypropylene (PP), i.e., in which a first layer 116 is made of PE and a second layer 117 is made of PP or in which the first layer 116 is made of PP and the second layer 117 is made of PE, thereby improving the stability of the first separator 113 a. In this case, the first layer 116 may have no connection with which one of the first and second positive electrode plates 111 and 121 the first layer 116 is opposite to. In addition, the first separator 113b, as shown in FIG. 6, is implemented in a three-layer structure of PE/PP/PE or PP/PE/PP, thereby further improving the stability of the first separator 113b.

As shown in FIG. 7, a coating layer 118 may be formed on the surface of the first separator 113c. In this case, the coating layer 118 may be formed on at least one surface of the first separator 113c. For example, the coating layer 118 may include heat-resistance ceramic or polymer resin, and accordingly, the stability of the first separator 113c can be improved. In this case, the polymer resin may include an adhesive material to be fixed to the electrode plate.

In order to further improve the stability of the first separator 113, the first separator 113 may be implemented using a structure or material having a specific tensile strength or more. Specifically, the first separator 113 may have a material or structure where the tensile strength of the first separator 113 in its length direction L is 1500kgf/cm² or the tensile strength of the first separator 113 is 1000kgf/cm². Alternatively, the first separator 113 may be implemented so that the perforation strength of the first separator 113 is 550gf or more, thereby improving the stability of the first separator 113. As the contraction ratio increases, the stability decreases. Hence, the first separator 113 may have a structure or material where the contraction ratio of the first separator 113 becomes 5% or less when the first separator 113 is exposed at 120°C for one hour.

FIG. 8 is an exploded perspective view of the second electrode assembly 120 of the secondary battery 100 shown in FIG. 2. FIG. 9 is a sectional view of the second electrode assembly 120 shown in FIG. 8. Hereinafter, the second electrode assembly 120 according to this embodiment will be described with reference to FIGS. 8 and 9.

As shown in FIGS. 8 and 9, the second electrode assembly 120 includes a second positive electrode plate 121, a second negative electrode plate 122 and a second separator 123 interposed between the second positive electrode plate 121 and the second negative electrode plate 122. Here, the second positive electrode plate 121 includes a second positive electrode active material coating portion 121a where a second positive electrode active material is coated on a second positive electrode base material, and a second positive electrode non-coating portion 121b where the second positive electrode active material is not coated, so that the second positive electrode base material is exposed. In addition, the second negative electrode plate 122 includes a second negative electrode active material coating portion 122a where a second negative electrode active material is coated on a second negative electrode base material, and a second negative electrode non-coating portion 122b where the second negative electrode active material is not coated, so that the second negative electrode base material is exposed. In this case, the second positive electrode tab 124 is connected to the second positive electrode non-coating portion 121b of the second positive electrode plate 121, and the second negative electrode tab 125 is connected to the second negative electrode non-coating portion 122b of the second negative electrode plate 122. The second separator 123 is used to prevent the second positive electrode plate 121 and the second negative electrode plate 122 from being directly contacted with each other, and is interposed between the second positive electrode plate 121 and the second negative electrode plate 122.

Meanwhile, the second electrode assembly 120 is implemented with high maximum discharge rate as described above. In order to implement the second electrode assembly 120 with high maximum discharge rate, there may be used, for example, a method of decreasing any one or more of the density and thickness of the second positive electrode active material coating portion and the loading amount of the second positive electrode active material in the second positive electrode active material coating portion when the first and second positive electrode active materials are the same. When the density and thickness of the second positive electrode active material coating portion and the loading amount of the second positive electrode active material in the second positive electrode active material coating portion are decreased, the capacity of the secondary battery may also be decreased. However, the first electrode assembly 110 is implemented with high capacity, and hence it is possible to solve such a problem. The method of implementing the second electrode assembly 120 with high maximum discharge rate is not limited thereto, and there may be used a method of allowing the first and second positive electrode active materials to be different from each other, and the like.

Meanwhile, in addition to the method of allowing the active materials to be different from each other, a method of allowing the first and second separators to be different from each other may be considered as the method of implementing the second electrode assembly 120 with high maximum discharge rate.

In this case, the second electrode assembly 120 is implemented with high maximum discharge rate, and hence the separator 123 may be configured to have a high pore density, i.e., high porosity, as compared with the first separator 113. For example, the porosity of the second separator 123 may be sufficiently increased to 40% or more, so that the movement of ion can be smoothly made, and be decreased to about 25% or more to be smaller than that of the first separator 113, thereby promoting the stability of the second separator 123. In terms of materials, polyurethane (PO) or non-woven material that is relatively highly porous may be used as the second separator 123. However, the material of the second separator 123 is not limited thereto, and a polyolefin-based material such as polypropylene or polyethylene may be used. In this case, the second separator 123 may implement a high pore density, as compared with the first separator 113.

In terms of ventilation rates, the second separator 123 may use a material or structure having improved ventilation rate by allowing the time when air of 100ml passes the material or structure to be 300 seconds or less, based on the JIS evaluation method. In this case, the first separator 113 may use a material configured so that the air of 100ml passes the material to be 500 seconds or less, based on the JIS evaluation method.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a first electrode assembly configured to include a first positive electrode plate, a first negative electrode plate, and a first separator interposed between the first positive electrode plate and the first negative electrode plate;
a second electrode assembly configured to include a second positive electrode plate, a second negative electrode plate, and a second separator interposed between the second positive electrode plate and the second negative electrode plate, the second electrode assembly having low capacity and high maximum discharge rate, as compared with the first electrode assembly; and
a case configured to accommodate the first and second electrode assemblies therein;
wherein the second separator has a porosity that is greater than that of the first separator.

2. A secondary battery according to claim 1, wherein the porosity of the second separator is 40% or more.

3. A secondary battery according to any preceding claim, wherein the first separator has a multi-layered structure.

4. A secondary battery according to claim 3, wherein the first separator has a two-layer structure of polyethylene (PE)/polypropylene (PP).

5. A secondary battery according to claim 3, wherein the first separator has a three-layer structure of PP/PE/PP or PE/PP/PE.

6. A secondary battery according to any preceding claim, wherein the first separator includes a coating layer positioned on at least one surface thereof.

7. A secondary battery according to claim 6, wherein the coating layer includes heat-resistance ceramic.

8. A secondary battery according to claim 6, wherein the coating layer includes polymer resin.

9. A secondary battery according to any preceding claim, wherein the tensile strength of the first separator in its length direction is 1500kgf/cm² or more.

10. A secondary battery according to any preceding claim, wherein the tensile strength of the first separator in its width direction is 1000kgf/cm² or more.

11. A secondary battery according to any preceding claim, wherein the perforation strength of the first separator is 550gf or more.

12. A secondary battery according to any preceding claim, wherein the contraction ratio of the first separator is 5% or less when the first separator is exposed at 120°C for one hour.

13. A secondary battery according to any preceding claim, wherein the second separator includes polyurethane (PO) or a non-woven material.

14. A secondary battery according to any preceding claim, wherein the second separator has a ventilation rate where air of 100ml passes through the second separator is 300 second or less.

15. The secondary battery according to any preceding claim, wherein the first and second electrode assemblies are separately wound.
